# EUROPEAN PATENT SPECIFICATION

(11) **EP 1 002 463 B1**
(45) Date of publication and mention of the grant of the patent: **10.12.2003**
(21) Application number: 99203300.1
(22) Date of filing: 08.10.1999
(51) Int. Cl.: A21D 13/08, A23L 1/18, A23L 1/09, A23P 1/14

(54) **SWEET SNACK**
SÜSSES SNACKPRODUKT
SNACK DOUX

(30) Priority: 03.11.1998 EP 98203697
(43) Date of publication of application: 24.05.2000
(73) Proprietor: SOCIETE DES PRODUITS NESTLE S.A., 1800 Vevey (CH)
(72) Inventor: Bonnasse-Gahot, Sabine, 1814 La Tour-de-peilz (CH); Jones-Wiltshire, Adrienne S., Sutton on the Forest York Y061 1 DP (GB); Pfaller, Werner, 1350 Orbe (CH); Diaz, François, 1018 Lausanne (CH); Fourre, Pierre Félix, 1400 Yverdon-les-Bains (CH)
(74) Representative: Wavre, Claude-Alain

(56) References cited:
- EP-A- 0 113 056
- EP-A- 0 188 398
- WO-A-94/22328

## Description

The present invention relates to a cooked-extruded-expanded sweet snack and to a process for manufacturing such a sweet snack.

US4650685 (Persson et al.) discloses a biscuit comprising agglomerated granules of a cooked-extruded base coated with a binder, the base comprising from 40 to 80 parts by weight of cereal flour, up to 20 parts sucrose and from 0.5 to 3 parts of oil or fat, and the binder comprising from 8 to 30 parts by weight of sucrose and/or mixtures of glucose and its polymers.

A first object of the present invention is to provide a cooked-extruded-expanded sweet snack mainly comprising an amylaceous material, milk solid non fat and an oil or fat, which has a fine, porous, light, melt-in the mouth texture with a biscuit/caramel flavour, which is attractive in shape and taste, and which may be coated with chocolate, for example

A second object of the present invention is to provide a process for manufacturing such a sweet snack.

To this end, the present cooked-extruded-expanded sweet snack has a porous texture, a specific weight of from 80 to 200 g/l and a biscuit and caramel flavour, and it comprises, in % by weight of the snack, from 5 to 15% of milk solid non fat, from 4 to 8% of oil or fat, from 35 to 75% of hydrolysed amylaceous material having a DE of from 5 to 45, up to 40% of non hydrolysed amylaceous material, from 5 to 15% of sugar, from 0.5 to 1.5 % of bisodium phosphate and from 1 to 3% of residual water.

The present process for manufacturing a sweet snack consists of cooking-extruding-expanding at 100 to 165°C under 20 to 40 bar for 5 to 50 s a mixture comprising, in parts by weight, from 5 to 15 parts of milk solid non fat, from 4 to 8 parts of oil or fat, from 35 to 75 parts of hydrolysed amylaceous material having a DE of from 5 to 45, up to 40 parts of non hydrolysed amylaceous material, from 5 to 15 parts of sugar, from 0.5 to 1.5 parts of bisodium phosphate, and added water up to a water content of from 5 to 10% by weight of the mixture, thus obtaining a rope of a thermo plastic mass having a porous texture, cooling the rope to solidifying it and cutting it into pieces.

It has surprisingly been found that the objects of the present invention are achieved in the best way with the snack and the process as above defined.

The terms "cooked" or "cooking" in the expressions "cooked-extruded-expanded" or "cooking-extruding-expanding" is to be understood in the present context as meaning "heated and/or cooked" or "heating and/or cooking" depending on whether the whole amylaceous material of the starting mixture is already cooked or at least a part of it is not yet cooked.

The present sweet snack thus comprises milk solid non fat, oil or fat, hydrolysed amylaceous material having a DE of from 5 to 45, optionally non hydrolysed amylaceous material, sugar, bisodium phosphate and residual water.

The milk solid non fat may be powdered skimmed milk, for example.

The oil or fat may be vegetable oil or fat or butter oil, which may act as a lubricating agent in the cooking-extrusion process.

The hydrolysed amylaceous material having a DE (dextrose equivalent) of from 5 to 45 may be a flour or even a starch of a cereal or mixture of cereals such as wheat, barley, rice and/or corn which has been cooked and then partially hydrolysed by alpha and/or beta amylases so that it contains a relatively high amount of glucose and its polymers, for example.

An advantageous process for obtaining such a hydrolysed amylaceous material in dehydrated, powdered form is disclosed in US4374860, for example.

The optionally non hydrolysed amylaceous material may be a a raw flour or even a native starch of a cereal or mixture of cereals such as wheat, barley, rice and/or corn, for example. It preferably consists of from 14 to 22% of wheat flour.

The sugar may be saccharose and/or dextrose, for example. It preferably consists of from 5 to 15% of saccharose and up to 10% of dextrose.

In the present product, the sodium biphosphate may act as a stabilizer (antioxydant) during storage, for example.

The biscuit and caramel flavour of the present product may be due to caramelisation and Maillard reactions occuring during cooking-extrusion-expansion of a mixture of milk solid non fat, oil or fat, hydrolysed amylaceous material having a DE of from 5 to 45, optionally non hydrolysed amylaceous material, sugar, bisodium phosphate and residual water.

For carrying out the present process for manufacturing a sweet snack, a mixture having the composition indicated above may be prepared by first mixing together powdery components to obtain a dry mix and then mixing together the dry mix and liquid or fluid components in a first mixing section of an extruder, for example.

The mixture especially comprises added water up to a water content of from 5 to 10%. Such a water content is adequate for obtaining a correct expansion after cooking-extruding the mixture.

Cooking the mixture may then be carried out in subsequent sections of the extruder where the mixture is heated, compressed and sheared so that it forms a cooked thermo plastic mass.

The thermo plastic mass may be extruded by having it pushed by an extruder screw or twin screw through the openings of a die provided for at an end of the extruder. The thermo plastic mass may be expanded by extruding it through the die into an open space at ambiant temperature and at atmospheric pressure.

For carrying out these cooking-extruding-expanding steps, any traditional food extruder may be used, while a twin screw extruder is preferred.

Preferably, a rather big screw length of from about 800 to about 1200 mm is chosen in order to provide an adequate residence time of from about 5 to 50 s, for example.

Preferably, from four to possibly about six barrel heating zones are provided for.

In a first zone, the screw configuration may be such (relatively large screw pitch) that the components of the mixture are simply mixed together and transported into the next zone.

In further zones, namely in from a second to possibly a sixth zone, the screw configuration may be such (relatively short screw pitch) that the mixture is simultaneously transported and kneaded. The barrel heating may be set within a temperature range of from about 65 to 90°C for a second zone, it may be set within a range of from about 100°C to 120°C for a third zone and within a range of from about 130°C to 165°C, for a fourth to possibly a sixth zone, for example.

In a last zone, the screw configuration may be such (relatively short screw pitch) that the cooked and kneaded mixture is further kneaded and compressed in order to be pushed through the openings of a die provided for after the end of the screw or twin screw, and the barrel heating may be set within a temperature range of from about 130°C to 165°C, for example.

The die may have one or more circular openings having of from 2 to 10 mm in diameter, for example. The die openings may also have different, fancy shapes such as stars, for example.

In a preferred embodiment of the present process, compressed nitrogen is injected into the plastified mass just before extruding it. Nitrogen injection may be carried out under a pressure of from about 20 to 40 bar, at a rate of from 0.1 to 0.6 g nitrogen per kg of mass, for example.

Most surprisingly, the cooked-extruded thermoplastic mass does not expand to a greater degree under the effect of nitrogen injection but on the contrary to a lesser degree. This is because the injected nitrogen not only increases the number of bubbles within the expanded rope of cooked-extruded thermoplastic mass but also cools down the mass before it is extruded. A fine porous texture may be obtained in this way which stands in contrast with a rather coarse porous texture which may be obtained without nitrogen injection.

For carrying out this preferred embodiment, the screw configuration in the last zone may also comprise mixing discs, bilobes or block of bilobes, for example.

The present sweet snack preferably has a rather large and attractive shape such as a stick of from about 30 to 100 mm in length, a sphere of from about 10 to 20 mm in diameter, or a finger-biscuit, for example.

The present sweet snack may be partly or totally coated with any coating, especially with a white or milk/brown chocolate coating, or a sugar based coating, for example. It preferably is coated with from 60 to 80 parts, especially from 68 to 77 parts of chocolate, in parts per 100 parts of coated snack.

The present snack may be conditioned in a packing providing for its protection against humidity, such as a packing made of a film with aluminium foil, for example.

The following examples are given as illustration of embodiments of the sweet snack and embodiments of the process for its manufacture according to the present invention. The parts and percentages are by weight.

### Example 1

For manufacturing a sweet snack having a stick shape which is to be eaten as a finger-biscuit, a mixture was prepared which had the following composition, in parts by weight (except added water):

| | |
|---|---|
| Skimmed milk powder | 12.37 |
| Bisodium phosphate | 1.00 |
| Hydrolysed wheat flour (DE 5-10) | 31.94 |
| Hydrolysed wheat flour (DE 30-35) | 39.68 |
| Crystal sugar | 9.94 |
| Butter oil | 5.07 |
| Added water, up to a water content of the mixture of | 6% |

For preparing the mixture, the powders were first mixed together to obtain a dry mix.

The dry mix, oil and added water were then mixed together in a first zone of a BC-45 type CLEXTRAL twin screw extruder.

This extruder had a screw diameter of 55.5 mm, a total processing length of 1200 mm, 6 barrel heating zones and a die made of a thick metal plate in which four cylindrical holes were bored defining four circular openings 2.5 mm in diameter. The screw speed was set to 270 rpm.

In the first zone, the screw pitch was 50 mm in length, the components of the mixture were simply mixed together and transported to the next zone.

In a second zone, the screw pitch was of 32 mm, the barrel heating was set to a temperature of from 70 to 90°C and the mixture was simultaneously heated up, transported and kneaded.

In a third zone, the screw pitch was of 32 mm, the barrel heating was set to a temperature of from 110 to 120°C, and the mixture was simultaneously further heated up, transported and kneaded.

In a fourth, a fifth and a sixth zone, the plastified mass or mixture was heated and/or cooked while being simultaneously transported and kneaded under a pressure of about 30 bar, the barrel heatings being set to a temperature of from 135 to 155°C.

In the fourth and the fifth zones, the screw pitch was of 32 mm.

The sixth zone was divided into two successive parts.

In the first part the screw configuration comprised mixing discs. In the middle of this first part, nitrogen was injected under a pressure of about 20 bar into the plastified mass at a rate of about 0.3 g of nitrogen per kg of mass.

In the second part of the sixth zone, the screw pitch was of 32 mm.

At the end of the sixth zone the hot plastic mass was compressed to about 30 bar and pushed through the die into a free open space at atmospheric pressure and ambient temperature, where the extruded still thermoplastic mass expanded to an expansion degree of about 2.

The rope of cooked-extruded-expanded thermoplastic mass was then cooled down rapidly in order to solidify. It was cut into pieces or sticks about 60 mm in length.

The sweet snacks thus obtained had a specific weight of 80 to 100 g/l and a very fine, porous, light, melt-in the mouth texture with a biscuit/caramel flavour.

### Example 2

For manufacturing a sweet snack having a stick shape which is to be eaten as a finger-biscuit, a mixture was prepared which had the following composition, in parts by weight (except added water):

| | |
|---|---|
| Skimmed milk powder | 12.37 |
| Bisodium phosphate | 1.00 |
| Hydrolysed wheat flour (DE 5-10) | 36.70 |
| Hydrolysed wheat flour (DE 40-45) | 34.92 |
| Crystal sugar | 9.94 |
| Butter oil | 5.07 |
| Added water, up to a water content of the mixture of | 6% |

For preparing the mixture, the powders were first mixed together to obtain a dry mix.

The dry mix, oil and added water were then mixed together in a first zone of a BC-45 type CLEXTRAL twin screw extruder.

The mixture was cooked-extruded-expanded as disclosed in Example 1.

The rope of cooked-extruded-expanded thermoplastic mass thus obtained was then cooled down in order to solidify. It was cut into pieces or sticks about 60 mm in length.

The sweet snack thus obtained had a specific weight of 80 to 100 g/l and it was then coated with a brown chocolate coating, at a rate of 77 parts chocolate per 100 parts of coated snack. It had a very fine, porous, light, melt-in the mouth texture with a biscuit/caramel/chocolate flavour.

### Example 3

A chocolate coated snack was prepared as illustrated in Example 2 except the following differences:
- A mixture was prepared which had the following composition, in parts by weight (except added water):

| | |
|---|---|
| Skimmed milk powder | 5.0 |
| Bisodium phosphate | 1.0 |
| Hydrolysed wheat flour (DE 35-40) | 49.0 |
| Wheat flour | 22.0 |
| Crystal sugar | 10.0 |
| Dextrose | 5.0 |
| Butter oil | 5.0 |
| Added water, up to a water content of the mixture of | 6% |

- In the first part of the sixth zone the screw configuration comprised block bilobes.

The sweet snack thus obtained had a specific weight of 80 to 100 g/l and it was then coated with a brown chocolate coating, at a rate of 68 parts chocolate per 100 parts of coated snack. It had a very fine, porous, light, melt-in the mouth texture with a biscuit/caramel/chocolate flavour.

### Example 4

A chocolate coated snack was prepared as illustrated in Example 2 except the following differences:
- A mixture was prepared which had the following composition, in parts by weight (except added water):

| | |
|---|---|
| Skimmed milk powder | 10.0 |
| Bisodium phosphate | 1.0 |
| Hydrolysed wheat flour (DE 35-40) | 44.0 |
| Wheat flour | 27.0 |
| Crystal sugar | 10.0 |
| Butter oil | 5.0 |
| Added water, up to a water content of the mixture of | 6% |

- In the first part of the sixth zone the screw configuration comprised block bilobes.

The sweet snack thus obtained had a specific weight of 80 to 100 g/l and it was then coated with a brown chocolate coating, at a rate of 71 parts chocolate per 100 parts of coated snack. It had a very fine, porous, light, melt-in the mouth texture with a biscuit/caramel/chocolate flavour.

## Claims

1. A cooked-extruded-expanded sweet snack having a porous texture, a specific weight of from 80 to 200 g/l and a biscuit and caramel flavour, and comprising, in % by weight of the snack, from 5 to 15% of milk solid non fat, from 4 to 8% of oil or fat, from 35 to 75% of hydrolysed amylaceous material having a DE of from 5 to 45, up to 40% of non hydrolysed amylaceous material, from 5 to 15% of sugar, from 0.5 to 1.5 % of bisodium phosphate and from 1 to 3% of residual water.

2. A sweet snack as claimed in claim 1, in which the non hydrolysed amylaceous material is a raw flour or a native starch of wheat, barley, rice and/or corn.

3. A sweet snack as claimed in claim 1, in which the non hydrolysed amylaceous material consists of from 14 to 22% of wheat flour.

4. A sweet snack as claimed in claim 1, in which the sugar is saccharose and/or dextrose.

5. A sweet snack as claimed in claim 1, in which the sugar consists of from 5 to 15% of saccharose and up to 10% of dextrose.

6. A sweet snack as claimed in claim 1, which, in addition, is coated with from 60 to 80 parts of a chocolate or sugar coating per 100 parts of coated snack.

7. A process for manufacturing a sweet snack consisting of cooking-extruding-expanding at 100 to 165°C under 20 to 40 bar for 5 to 50 s a mixture comprising, in parts by weight, from 5 to 15 parts of milk solid non fat, from 4 to 8 parts of oil or fat, from 35 to 75 parts of hydrolysed amylaceous material having a DE of from 5 to 45, up to 40 parts of non hydrolysed amylaceous material, from 5 to 15 parts of sugar, from 0.5 to 1.5 parts of bisodium phosphate, and added water up to a water content of from 5 to 10% by weight of the mixture, thus obtaining a rope of a thermoplastic mass having a porous texture, cooling the rope to solidifying it and cutting it into pieces.

8. A process as claimed in claim 7, in which the mixture is cooked-extruded-expanded to an expansion degree of from 2 to 5.

9. A process as claimed in claim 7, in which nitrogen is injected into the plastified mass just before extruding.

10. A process as claimed in claim 7, which further comprises coating the cut pieces with a chocolate or a sugar coating.

## Patentansprüche

1. Kochextrudierter expandierter süßer Snack, der eine poröse Textur, ein spezifisches Gewicht von 80 bis 200 g/l und einen Keks- und Karamel-Geschmack aufweist und, in Gewichtsprozent des Snacks, von 5 bis 15% Nichtfett-Milchfeststoffe, von 4 bis 8% Öl oder Fett, von 35 bis 75% eines hydrolysierten Stärkematerials mit einem DE von 5 bis 45, bis zu 40% eines nicht-hydrolysierten Stärkematerials, von 5 bis 15% Zucker, von 0,5 bis 1,5% Dinatriumphosphat und von 1 bis 3% restliches Wasser enthält.

2. Süßer Snack nach Anspruch 1, bei dem das nicht-hydrolysierte Stärkematerial ein rohes Mehl oder eine native Stärke aus Weizen, Gerste, Reis und/oder Mais ist.

3. Süßer Snack nach Anspruch 1, bei dem das nicht-hydrolysierte Stärkematerial aus von 14 bis 22% Weizenmehl besteht.

4. Süßer Snack nach Anspruch 1, bei dem der Zucker Saccharose und/oder Dextrose ist.

5. Süßer Snack nach Anspruch 1, bei dem der Zucker aus von 5 bis 15% Saccharose und bis zu 10% Dextrose besteht.

6. Süßer Snack nach Anspruch 1, der, zusätzlich, mit von 60 bis 80 Teilen eines Schokolade- oder Zuckerüberzugs pro 100 Teile des überzogenen Snacks überzogen ist.

7. Verfahren zur Herstellung eines süßen Snacks, das aus dem Kochextrudieren und Expandieren bei 100 bis 150°C unter 20 bis 40 bar in 5 bis 50 s einer Mischung besteht, die, in Gewichtsteilen, von 5 bis 15 Teile Nichtfett-Milchfeststoffe, von 4 bis 8 Teile Öl oder Fett, von 35 bis 75 Teile eines hydrolysierten Stärkematerials mit einem DE von 5 bis 45, bis zu 40 Teile eines nicht-hydrolysierten Stärkematerials, 5 bis 15 Teile Zucker, 0,5 bis 1,5 Teile Dinatriumphosphat und Wasser, so daß ein Wassergehalt von 5 bis 15 Gew.-% der Mischung erhalten wird, umfaßt, wobei ein Strang einer thermoplastischen Masse mit einer porösen Textur erhalten wird, dem Abkühlen des Strangs unter seiner Verfestigung und seinem Schneiden in Stücke besteht.

8. Verfahren nach Anspruch 7, bei dem die Mischung bis zu einem Expansionsgrad von 2 bis 5 kochextrudiert und expandiert wird.

9. Verfahren nach Anspruch 7, bei dem kurz vor der Extrusion Stickstoff in die plastifizierte Masse injiziert wird.

10. Verfahren nach Anspruch 7, das außerdem das Überziehen der geschnittenen Stücke mit einem Schokolade- oder Zucker-überzug umfaßt.

## Revendications

1. En-cas sucré cuit-extrudé-expansé ayant une texture poreuse, un poids spécifique de 80 à 200 g/l et un arôme de biscuit et de caramel et comprenant, en % en poids de l'en-cas, 5 à 15% de lait écrémé sec, 4 à 8% d'une huile ou matière grasse, 35 à 75% d'une matière amylacée hydrolysée ayant un équivalent en dextrose (DE) de 5 à 45, jusqu'à 40% d'une matière amylacée non hydrolysée, 5 à 15% de sucre, 0,5 à 1,5% de phosphate disodique et 1 à 3% d'eau résiduelle.

2. En-cas sucré suivant la revendication 1, dans lequel la matière amylacée non hydrolysée est une farine brute ou un amidon naturel de blé, d'orge, de riz et/ou de maïs.

3. En-cas sucré suivant la revendication 1, dans lequel la matière amylacée non hydrolysée consiste en une quantité de 14 à 22% de farine de blé.

4. En-cas sucré suivant la revendication 1, dans lequel le sucre est le saccharose et/ou le dextrose.

5. En-cas sucré suivant la revendication 1, dans lequel le sucre consiste en une quantité de 5 à 15% de saccharose et une quantité allant jusqu'à 10% de dextrose.

6. En-cas sucré suivant la revendication 1, qui, en outre, est enrobé avec 60 à 80 parties d'un enrobage de chocolat ou de sucre pour 100 parties d'en-cas enrobé.

7. Procédé pour la production d'un en-cas sucré, consistant en une cuisson-extrusion-expansion à une température de 100 à 165°C sous une pression de 20 à 40 bars pendant un temps de 5 à 50 s d'un mélange comprenant, en parties en poids, 5 à 15 parties de lait écrémé sec, 4 à 8 parties d'une huile ou matière grasse, 35 à 75 parties d'une matière amylacée hydrolysée ayant un DE de 5 à 45; jusqu'à 40 parties d'une matière amylacée non hydrolysée, 5 à 15 parties de sucre, 0,5 à 1,5 partie de phosphate disodique, et de l'eau ajoutée jusqu'à une teneur en eau de 5 à 10% en poids du mélange, ce qui permet d'obtenir un cordon d'une masse thermoplastique ayant une texture poreuse ; le refroidissement du cordon pour provoquer sa solidification, et sa coupe en morceaux.

8. Procédé suivant la revendication 7, dans lequel le mélange est soumis à une cuisson-extrusion-expansion à un degré d'expansion de 2 à 5.

9. Procédé suivant la revendication 7, dans lequel de l'azote est injecté dans la masse plastifiée juste avant l'extrusion.

10. Procédé suivant la revendication 7, qui comprend en outre l'enrobage des morceaux coupés avec un enrobage de chocolat ou de sucre.
